# EUROPEAN PATENT APPLICATION

(11) **EP 4 636 833 A1**
(43) Date of publication of application: **22.10.2025**
(21) Application number: 24877557.9
(22) Date of filing: 11.10.2024
(51) Int. Cl.: H01M 4/04, B05C 5/02, B05C 11/10

(54) **ELECTRODE MANUFACTURING APPARATUS AND ELECTRODE MANUFACTURING METHOD USING SAME**

(30) Priority: 13.10.2023 KR 20230136373
(71) Applicant: LG Energy Solution, Ltd., Seoul 07335 (KR)
(72) Inventor: CHOI, Min Jun, Daejeon 34122 (KR)
(74) Representative: Plasseraud IP
(86) International application number: PCT/KR2024/015405
(87) International publication number: WO 2025/080022

(57) **Abstract**

Disclosed are an electrode manufacturing apparatus including an unwinder configured to unwind an electrode current collector without an electrode active material coated thereon, a rewinder configured to wind the electrode current collector with the electrode active material coated thereon, a stamping member located between the unwinder and the rewinder, the stamping member being configured to apply an anti-coating material, configured to prevent coating of the electrode active material, to the electrode current collector, and an electrode active material supply member configured to coat the electrode current collector with the electrode active material and an electrode manufacturing method using the same, whereby it is possible to prevent the occurrence of a sliding portion on an edge of a coated portion of an electrode.

## Description

### [Technical Field]

This application claims the benefit of priority to Korean Patent Application No. 2023-0136373 filed on October 13, 2023, the disclosure of which is incorporated herein by reference in its entirety.

The present invention relates to an electrode manufacturing apparatus and an electrode manufacturing method using the same. More particularly, the present invention relates to an electrode manufacturing apparatus capable of preventing sliding on a coated portion, which is an electrode active material layer formed on an electrode current collector by coating, and an electrode manufacturing method using the same.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

An electrode of the lithium secondary battery includes a coated portion coated with an electrode active material and an uncoated portion coated with no electrode active material on one surface or opposite surfaces of an electrode plate, and an electrode tab may be formed on the uncoated portion.

A process of manufacturing the electrode includes the steps of coating an electrode sheet wound in the form of a roll with an electrode active material except for the part on which an electrode tab is to be formed, drying and rolling the electrode active material, slitting the electrode sheet, and notching the slit electrode sheet into a unit electrode.

The electrode active material may flow down from the edge of the coated portion before the coated portion coated with the electrode active material is dried, and such a region is referred to as a sliding portion. Since the thickness of the electrode is reduced at the sliding portion, the electrode and a separator may not be adhered to each other and may be delaminated from each other when the electrode and the separator are stacked and laminated.

This phenomenon reduces the rate at lithium ions pass through the separator, which may lead to formation of overpotential at a negative electrode, increased imbalance in the concentration of lithium salts in an electrolyte, and accelerated decomposition of the electrolyte, whereby the electrolyte may be quickly depleted. This results in lithium precipitation.

In order to solve the above problems, a method of compensating for the thickness reduction by attaching a CPP film to the sliding portion of the electrode has been tried, but the above problems are not completely solved.

Alternatively, an etching process has been developed in which the sliding portion is removed by a laser in the process of coating the electrode active material, but as the thickness of the electrode active material is decreased, the process becomes difficult, and micro-pinholes may occur, affecting the quality of the electrode.

Patent Document 1 discloses a method of forming a dam line coating layer having a shape surrounding a region where an electrode slurry is to be coated and coating the electrode slurry in the region surrounded by the dam line coating layer to form an electrode mixture layer.

In Patent Document 1, the dam line coating layer is formed on the edge of the electrode slurry in order to prevent the electrode slurry from flowing down, thereby preventing the occurrence of a sliding portion, but since the process of forming the dam line coating layer and the process of coating the electrode slurry are separately performed, the process time may increase, and the process of filling the electrode slurry in the dam line coating layer needs to be elaborately performed.

Patent Document 2 relates to an electrode having a binder layer and a method of manufacturing the same, wherein the electrode is configured such that an electrode active material layer is formed on a current collector having an electrode tab formed at one end, a binder layer is formed between the current collector and the electrode active material layer, and the binder layer is formed at both ends of the electrode active material layer.

In Patent Document 2, a binder composition is previously applied to both ends of the current collector at the positions where the electrode slurry are to be applied before applying the electrode slurry, whereby it is possible to prevent the electrode slurry from being separated from the current collector during the notching process of the current collector.

That is, Patent Document 2 does not suggest technology for preventing the sliding portion from being formed on the electrode active material layer.

Therefore, there is a need for technology that prevents the occurrence of a sliding portion on the edge of a coated portion coated with an electrode active material such that an electrode and a separator are adhered to each other over the boundary therebetween, thereby preventing problems of electrolyte depletion and lithium precipitation, and that can be carried out in a continuous process so as not to delay the electrode manufacturing process.

### (Prior Art Documents)

(Patent Document 1) Korean Patent Application Publication No. 2022-0124918 (2022.09.14)
(Patent Document 2) Korean Patent Application Publication No. 2022-0000064 (2022.01.03)

### [Disclosure]

### [Technical Problem]

The present invention has been made in view of the above problems, and it is an object of the present invention to provide an electrode manufacturing apparatus capable of preventing the occurrence of a sliding portion on the edge of a coated portion where an electrode active material is coated and an electrode manufacturing method using the same.

### [Technical Solution]

An electrode manufacturing apparatus according to the present invention to accomplish the above object includes an unwinder (200) configured to unwind an electrode current collector (100) without an electrode active material coated thereon, a rewinder (300) configured to wind the electrode current collector (100) with the electrode active material coated thereon, a stamping member (400) located between the unwinder (200) and the rewinder (300), the stamping member being configured to apply an anti-coating material (413, 423), configured to prevent coating of the electrode active material, to the electrode current collector (100), and an electrode active material supply member (500) configured to coat the electrode current collector (100) with the electrode active material.

In the electrode manufacturing apparatus, the anti-coating material may include a hydrophobic material.

In addition, the anti-coating material may include a volatile material.

In addition, the electrode manufacturing apparatus may further include a drying member (600) configured to dry the electrode active material and to volatilize the anti-coating material.

In the electrode manufacturing apparatus, the stamping member (40) may include a pair of stamping members located on an upper surface of the electrode current collector and a lower surface of the electrode current collector (100) so as to face each other.

In the electrode manufacturing apparatus, the stamping member (400) may include a stamping body (411, 421) including a cylindrical central portion having an axis of rotation parallel to a width direction of the electrode current collector (100) and a plurality of projecting portions projecting outward from the cylindrical central portion so as to be spaced apart from each other by a predetermined distance and an application member (412, 422) provided at an end of each projecting portions of the plurality of projecting portions of the stamping body (411, 421).

In addition, the stamping body (411, 421) may supply the anti-coating material (413, 423) to the application member (412, 422) while rotating about the axis of rotation thereof, and the application member (412, 422) may apply the anti-coating material (413, 423) to the electrode current collector (100) at predetermined intervals while discontinuously contacting the electrode current collector (100).

In addition, the stamping body (411, 421) may rotate in a transfer direction of the electrode current collector (100).

The electrode active material supply member (500) may include a pair of electrode active supply members located on an upper surface and a lower surface of the electrode current collector (100) so as to face each other.

The electrode active material may include a hydrophilic material.

The present invention provides an electrode manufacturing method using the electrode manufacturing apparatus. Specifically, the electrode manufacturing method may include a first step of supplying an electrode current collector, a second step of applying an anti-coating material to the electrode current collector, a third step of applying an electrode active material to the electrode current collector to form a coating layer, and a fourth step of drying the electrode current collector coated with the anti-coating material and the electrode active material.

In the electrode manufacturing method, in the second step, the anti-coating materials may be applied so as to be spaced apart from each other by a predetermined distance.

In the electrode manufacturing method, the electrode active material may not be coated in the region where the anti-coating material is applied.

The electrode manufacturing method may further include connecting an electrode lead to the electrode current collector after the anti-coating material is removed from a region where the anti-coating material is applied.

The electrode manufacturing method may further include slitting the electrode current collector coated with the anti-coating material and the electrode active material after the fourth step.

In addition, the present invention may provide various combinations of the above solving means.

### [Advantageous Effects]

As is apparent from the above description, in an electrode manufacturing apparatus according to the present invention and an electrode manufacturing method using the same, a stamping member configured to apply a hydrophobic material, which is an anti-coating material, to an uncoated portion of an electrode current collector is provided, whereby it is possible to prevent the electrode active material from flowing down, and therefore it is possible to prevent the occurrence of a sliding portion on the edge of the coated portion.

In addition, in the electrode manufacturing apparatus according to the present invention and the electrode manufacturing method using the same, the anti-coating material includes a volatile material, which can be volatilized during a process of drying the electrode active material, and therefore a separate process for removing the anti-coating material is unnecessary.

In addition, an electrode manufactured by the electrode manufacturing apparatus and the electrode manufacturing method using the same does not have a sliding portion in the coated portion, whereby the entire surface of the electrode opposite a separator may be adhered to the separator, which may prevent depletion of an electrolyte or precipitation of lithium.

### [Description of Drawings]

FIG. 1 is a cross-sectional view of an electrode manufacturing apparatus according to a first embodiment of the present invention.
FIG. 2 is a partial perspective view of the electrode manufacturing apparatus shown in FIG. 1.
FIG. 3 is a cross-sectional view of an electrode manufacturing apparatus according to a second embodiment of the present invention.
FIG. 4 is a cross-sectional view of an electrode manufacturing apparatus according to a third embodiment of the present invention.
FIG. 5 is a flowchart showing the sequence of an electrode manufacturing method according to the present invention.
FIG. 6 is a view illustrating an example of a process of manufacturing a unit electrode from an electrode current collector having a coated portion and an uncoated portion formed thereon using the electrode manufacturing apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

As used herein, an electrode current collector is a target which is configured in the form of a sheet and to which an anti-coating material and an electrode active material are applied, and includes states before and after a coated portion where the electrode active material is coated and an uncoated portion where the electrode active material is not coated are formed.

In addition, the electrode active material is used in the sense of including an electrode slurry or an electrode mixture including not only an electrode active material but also a conductive agent, a binder, a solvent, and an additive, and includes both a positive electrode active material and a negative electrode active material.

Embodiments of the present invention will be described in detail with reference to the accompanying drawings.

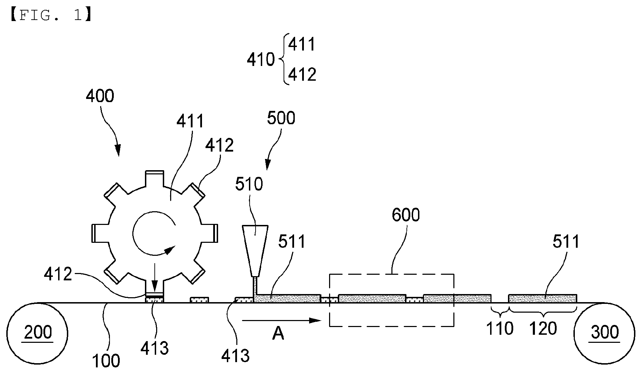

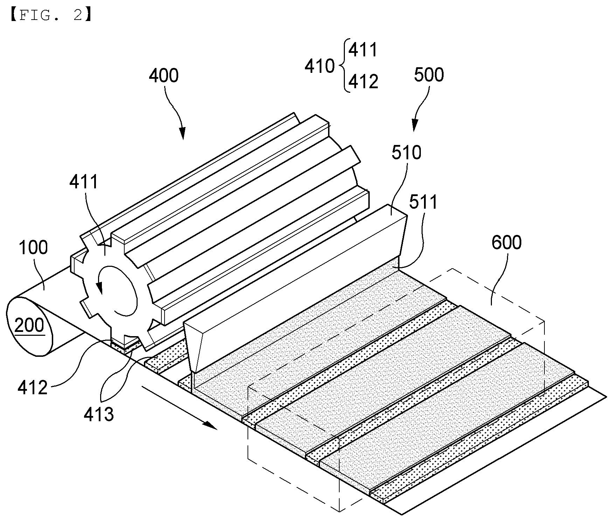

FIG. 1 is a sectional view of an electrode manufacturing apparatus according to a first embodiment of the present invention, and FIG. 2 is a partial perspective view of the electrode manufacturing apparatus shown in FIG. 1. Referring to FIGs. 1 and 2, the electrode manufacturing apparatus according to the present invention includes an unwinder 200 configured to unwind an electrode current collector 100 without an electrode active material coated thereon, a rewinder 300 configured to wind an electrode current collector 100 with an electrode active material coated thereon, a stamping member 400 located between the unwinder 200 and the rewinder 300, the stamping member being configured to apply an anti-coating material configured to prevent an electrode active material from being coated to the electrode current collector 100, an electrode active material supply member 500 configured to coat the electrode current collector 100 with an electrode active material, and a drying member 600.

The electrode manufacturing apparatus of FIG. 1 is configured such that a first stamping unit 410 is located above the electrode current collector 100 as the stamping member 400 and a first active material supply unit 510 is located above the electrode current collector 100 as the electrode active material supply member 500, whereby a first anti-coating material 413 is applied only to an upper surface of the electrode current collector 100 and only the upper surface of the electrode current collector 100 is coated with a first electrode active material 511.

First, the stamping member 400 includes a first stamping body 411 including a cylindrical central portion having an axis of rotation parallel to a width direction of the electrode current collector 100 and a plurality of projecting portions projecting outward from the central portion so as to be spaced apart from each other by a predetermined distance and a first application member 412 provided at the end of each of the plurality of projecting portions of the first stamping body 411.

The first stamping body 411 supplies an anti-coating material to the first application member 412 while rotating about the axis of rotation thereof, and the first application member 412 applies the first anti-coating material 413 to the electrode current collector 100 at predetermined intervals while discontinuously contacting the electrode current collector 100.

Here, the first application member 412 may be made of a porous resilient material, such as a sponge, which absorbs the first anti-coating material 413 and then applies the same to the electrode current collector 100. That is, the first anti-coating material 413 supplied to the first stamping body 411 is dispersed into the plurality of projecting portions and supplied to the plurality of first application members 412, and the plurality of first application members 412 applies the first anti-coating material 413 to the electrode current collector 100 upon contact with the electrode current collector 100.

Since the first anti-coating material 413 is configured to prevent the first electrode active material 511 from being coated on the surface of the electrode current collector 100, the first anti-coating material must not be applied to a part on which the electrode active material 511 is to be coated. That is, the spacing of the first anti-coating material 413 may be equal to the length of a region of a coated portion 120 where the electrode active material is coated.

Consequently, the electrode current collector 100 unwound from the unwinder 200 is first coated with the first anti-coating material 413 by the stamping member 400, and is then coated with the first electrode active material 511 by the electrode active material supply unit 500. At this time, the first stamping body 411 rotates in a transfer direction A of the electrode current collector 100, whereby it is not necessary to temporarily stop the electrode current collector 100 in order to apply the first anti-coating material 413.

The stamping member 400 discontinuously applies the anti-coating material 413, and the electrode active material supply unit 500 preferably discontinuously adds the first electrode active material 511 for coating and more preferably discontinuously adds the first electrode active material toward the region where the anti-coating material 413 is not applied.

The first anti-coating material 413 may include a hydrophobic material, whereas the first electrode active material 511 may include a hydrophilic material. Consequently, even if the first electrode active material 511 is partially added to the region where the anti-coating material 413 is not applied, the first electrode active material 511 is only coated on the region where the first anti-coating material 413 is not applied because the region where the first anti-coating material 413 is applied is not coated with the first electrode active material 511.

Furthermore, since the first electrode active material 511 is applied between the first anti-coating materials 413 that are located adjacent to each other, the first anti-coating material 413 may serve as a barrier to prevent the first electrode active material 511 from flowing down. Therefore, the electrode manufactured using the electrode manufacturing apparatus according to the present invention may not have a sliding portion formed thereon, which may solve the problems caused by formation of the sliding portion.

Meanwhile, considering the purpose of the first anti-coating material 413 being added to the electrode current collector 100 to prevent the first electrode active material 511 from flowing down, the thickness of the first anti-coating material 413 may be formed so as to be less than the thickness of the first electrode active material 511, or may be formed so as to be equal to the thickness of the first electrode active material 511. Alternatively, as will be described below, the thickness of the first anti-coating material 413 may be formed so as to be greater than the thickness of the first electrode active material 511 given that the first anti-coating material 413 includes a volatile material that is removed by the drying member.

For example, the first anti-coating material may include a hydrophobic polymer and a hydrophobic solvent, wherein the hydrophobic polymer may be at least one selected from the group consisting of polybutadiene, polyurethane, polyimide, polyester, polycarbonate, polyphenylene sulfide (PPS), polyolefin, polydimethylsiloxane (PDMS), a styrene-butadiene copolymer, (meth)acrylate, polyacrylonitrile (PAN), polytetrafluoroethylene (PTFE), and a mixture thereof.

The hydrophobic solvent may be at least one selected from the group consisting of propanol, pentanol, butanol, pentanol, hexanol, ethylene glycol, propylene glycol, diethylene glycol, glycerol, and a mixture thereof.

The first electrode active material 511 may include an electrode active material, a binder, a conductive agent, an additive, and a solvent, which may be hydrophilic.

For example, the hydrophilic solvent constituting the first electrode active material 511 may be a polar solvent, and a representative hydrophilic solvent may be water. In addition, the hydrophilic binder may include at least one hydrophilic monomer selected from the group consisting of fumaric acid, (meth)acrylic acid, itaconic acid, sodium p-styrene sulfonate, sodium vinyl sulfonate, sodium allyl sulfonate, sodium 2-methylallyl sulfonate, sodium ethylmethacrylate sulfonate, (meth)acrylamide, N-methylolacrylamide, N,N-dimethylacrylamide, and 2-acrylamide-2-methylpropane sulfonic acid.

Next, the drying member 600 is configured to dry the first electrode active material 511 and to volatilize the first anti-coating material 413.

Specifically, the electrode current collector 100 to which the first anti-coating material 413 and the first electrode active material 511 are added is dried in the process of passing through the drying member 600, wherein the drying member 600 may be configured in the form of a chamber through which the electrode current collector 100 may pass, or may be configured to heat and dry each of the upper surface and the lower surfaces of the electrode current collector 100.

Since the first anti-coating material 413 includes a volatile material, the first anti-coating material 413 may be removed while passing through the drying member.

As such, since the drying processes of the first anti-coating material and the first electrode active material are simultaneously carried out in the present invention, the manufacturing process may be simple and the manufacturing cost may be reduced compared to drying the first anti-coating material and the first electrode active material through separate processes.

As described above, an uncoated portion 110 from which the first anti-coating material 413 has been removed and a coated portion 120 where the first electrode active material 511 is coated are formed on the electrode current collector 100 after passing through the drying member 600. As such, since the first anti-coating material 413 is removed by the drying member 600, an electrode lead is connected to the uncoated portion 110 to which the first anti-coating material 413 was added.

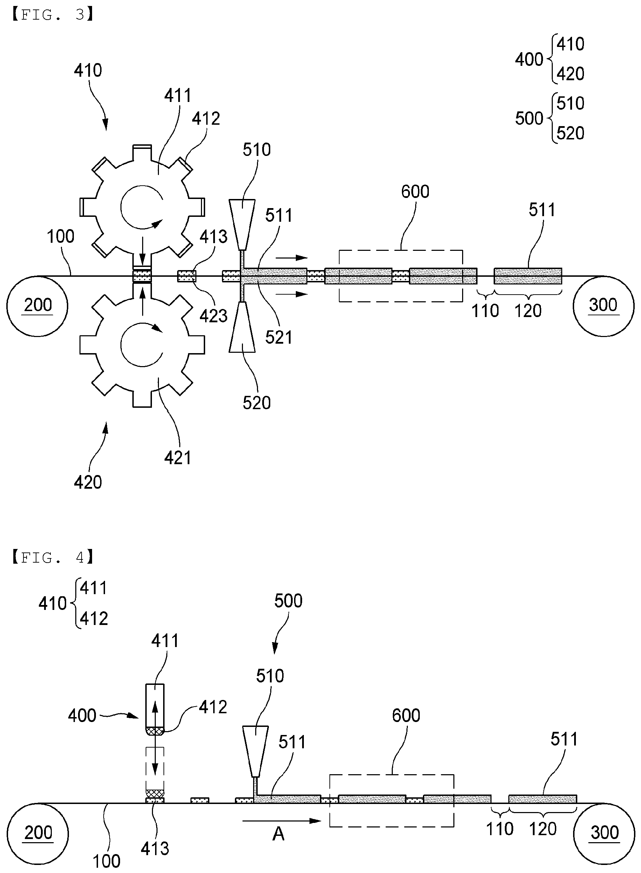

FIG. 3 is a sectional view of an electrode manufacturing apparatus according to a second embodiment of the present invention. Referring to FIG. 3, the electrode manufacturing apparatus according to the second embodiment is identical in configuration to the electrode manufacturing apparatus according to the first embodiment, except that a stamping member and an electrode active material supply member are disposed on a lower surface of an electrode current collector as well as an upper surface of the electrode current collector.

Specifically, the stamping member 400 includes a pair of a first stamping unit 410 and a second stamping unit 420 located respectively on the upper surface and the lower surface of the electrode current collector 100 so as to face each other. In addition, the electrode active material supply member 500 includes a pair of first active material supply unit 510 and second active material supply unit 520 located respectively on the upper surface and the lower surface of the electrode current collector 100 so as to face each other.

A first anti-coating material 413 added by the first stamping unit 410 and a second anti-coating material 423 added by the second stamping unit 420 are added to opposite surfaces of the electrode current collector 100 so as to overlap each other, and a first electrode active material 511 added by the first active material supply unit 510 and a second electrode active material 521 added by the second active material supply unit 520 are added to the opposite surfaces of the electrode current collector 100 so as to overlap each other.

Although FIG. 3 shows that the first anti-coating material 413 and the second anti-coating material 423 are simultaneously added to the upper surface and the lower surface of the electrode current collector 100 and that the first electrode active material 511 and the second electrode active material 521 are simultaneously added to the upper surface and the lower surface of the electrode current collector 100, the first anti-coating material 413 and the first electrode active material 511 may be added and dried to one surface of the upper surface and the lower surface of the electrode current collector 100, and then the second anti-coating material 423 and the second electrode active material 521 may be added and dried to the other surface of the upper surface and the lower surface of the electrode current collector 100.

FIG. 4 is a sectional view of an electrode manufacturing apparatus according to a third embodiment of the present invention. Referring to FIG. 4, the electrode manufacturing apparatus according to the third embodiment is identical in configuration to the electrode manufacturing apparatus according to the first embodiment except for a stamping member.

The stamping member 400 according to the third embodiment includes a first stamping body 411 formed in an approximately cuboidal shape and a first application member 412 provided on a lower surface of the first stamping body 411. The first stamping body 411 adds a first anti-coating material 413 to an outer surface of an electrode current collector 100 at predetermined intervals while moving upward and downward through a cylinder (not shown), a servomotor (not shown), or the like.

The first application member 412 is made of a sponge or the like capable of absorbing the first anti-coating material 413 as described above, and when the first anti-coating material 413 is supplied to the first application member 412 through the first stamping body 411, the first anti-coating material 413 may be added to the electrode current collector 100 whenever the first application member 412 comes into contact with the electrode current collector 100.

Although FIG. 4 shows the stamping member 400 and the electrode active material supply member 500 being disposed only on the upper surface of the electrode current collector 100, the stamping member 400 and the electrode active material supply member 500 may further be disposed on the lower surface of the electrode current collector 100. In addition, the first anti-coating material and the second anti-coating material may be simultaneously added to the upper surface and the lower surface of the electrode current collector, and the first electrode active material and the second electrode active material may be simultaneously added to the upper surface and the lower surface of the electrode current collector. Alternatively, the first anti-coating material and the first electrode active material may be added to the upper surface of the electrode current collector and dried, and then the second anti-coating material and the second electrode active material may be added to the lower surface of the electrode current collector and dried.

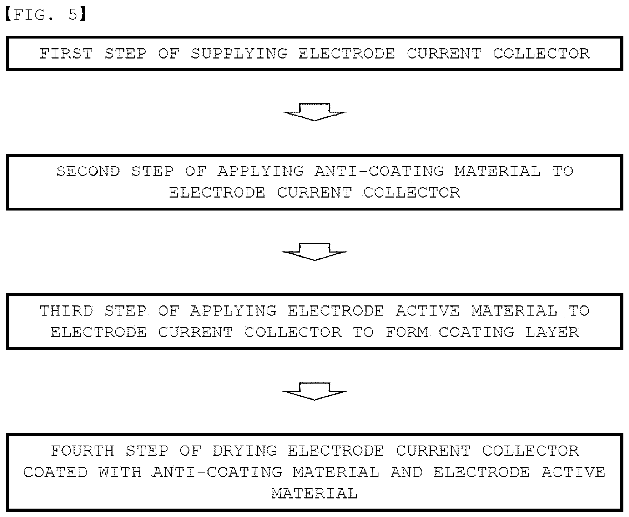

FIG. 5 is a flowchart showing the sequence of an electrode manufacturing method according to the present invention. Referring to FIG. 5, the electrode manufacturing method according to the present invention includes a first step of supplying an electrode current collector, a second step of applying an anti-coating material to the electrode current collector, a third step of applying an electrode active material to the electrode current collector to form a coating layer, and a fourth step of drying the electrode current collector coated with the anti-coating material and the electrode active material.

That is, when an electrode current collector is supplied, an anti-coating material is first added to the electrode current collector, and an electrode active material is coated on an outer surface of the electrode current collector to which the anti-coating material is added.

In the second step, the anti-coating materials are applied so as to be spaced apart from each other by a predetermined distance, and in the third step, the electrode active material is not coated in the region where the anti-coating material is applied, and a coated portion where the electrode active material is coated is formed only in the region where the anti-coating material is not added.

Specifically, when the electrode active material is applied to the electrode current collector to which the anti-coating material is added, the electrode active material, which is hydrophilic, is not coated on the surface of the anti-coating material, which is hydrophobic, whereby a coated portion where the electrode active material is applied is formed only in the region where the anti-coating material is not added. Of course, the anti-coating material may also serve as a support configured to prevent the electrode active material from flowing down before drying.

In the fourth step, a volatile hydrophobic material included in the anti-coating material is volatilized and removed while passing through the drying member. Consequently, the coated portion has no sliding portion, and the electrode current collector is exposed from the region where the anti-coating material was applied such that an electrode lead can be attached to the electrode current collector.

The electrode manufacturing method according to the present invention further includes a step of forming an electrode lead in the region where the anti-coating material has been applied and a step of slitting the electrode current collector coated with the anti-coating material and the electrode active material.

Here, the preceding and following relationship between the step of forming the electrode leads and the step of slitting the electrode current collector is not particularly limited.

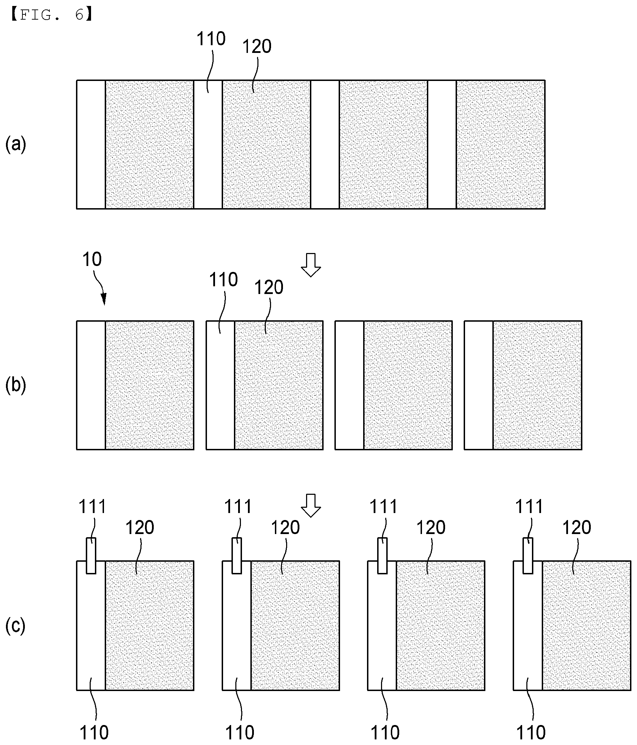

In this regard, FIG. 6 is a view illustrating an example of a process of manufacturing a unit electrode from the electrode current collector having the coated portion and the uncoated portion formed thereon using the electrode manufacturing apparatus according to the present invention.

Referring to FIG. 6, an uncoated portion 110, which is not coated with the electrode active material, and a coated portion 120, which is coated with the electrode active material, may first be formed on the electrode current collector that has passed through the drying member (step (a)).

Subsequently, in step (b), a process of slitting the electrode current collector coated with the anti-coating material and the electrode active material is performed. In the case of FIG. 6, four unit electrodes 10 may be produced by the slitting process in which the uncoated portion 110 and the coated portion 120 are separated from each other at the boundary therebetween.

In step (c), an electrode lead 111 is connected to the region of each electrode current collector 100 exposed as the result of the anti-coating material being volatilized through the drying process.

The unit electrode 10 thus manufactured may be a positive electrode or a negative electrode. After attaching the electrode lead to the electrode current collector, the positive electrode and the negative electrode may be wound in the state in which a separator is interposed therebetween to manufacture a jelly-roll type electrode assembly.

Although FIG. 6 shows a form in which a single electrode lead 111 is attached to a single unit electrode 10, a form in which a plurality of electrode leads is disposed on a single unit electrode 10 so as to be spaced apart from each other is also within the scope of the present invention.

As such, the unit electrode manufactured by the present invention does not have a sliding portion formed on the coated portion, and when the unit electrode and a separator are laminated by stacking, the region where the unit electrode and the separator are delaminated is not formed, whereby it is possible to prevent the conventional problems of increased resistance, electrolyte depletion, and lithium precipitation.

Those skilled in the art to which the present invention pertains will appreciate that various applications and modifications are possible within the scope of the present invention based on the above description.

In particular, it is obvious that the present invention is applicable to a process for manufacturing a pole-plate type electrode with an electrode tab formed by slitting and notching the electrode current collector.

### (Description of Reference Numerals)

10: Unit electrode
100: Electrode current collector
110: Uncoated portion
111: Electrode lead
120: Coated portion
130: Slitting line
200: Unwinder
300: Rewinder
400: Stamping member
410: First stamping unit
411: First stamping body 412: First application member
413: First anti-coating material
420: Second stamping unit
421: Second stamping body 422: Second application member
423: Second anti-coating material
500: Electrode active material supply member
510: First active material supply unit 511: First electrode active material
520: Second active material supply unit 521: Second electrode active material
600: Drying member

## Claims

1. An electrode manufacturing apparatus comprising:
an unwinder configured to unwind an electrode current collector without an electrode active material coated thereon;
a rewinder configured to wind the electrode current collector with the electrode active material coated thereon;
a stamping member located between the unwinder and the rewinder, the stamping member being configured to apply an anti-coating material, configured to prevent coating of the electrode active material, to the electrode current collector; and
an electrode active material supply member configured to coat the electrode current collector with the electrode active material.

2. The electrode manufacturing apparatus according to claim 1, wherein the anti-coating material comprises a hydrophobic material.

3. The electrode manufacturing apparatus according to claim 2, wherein the anti-coating material comprises a volatile material.

4. The electrode manufacturing apparatus according to claim 3, further comprising a drying member configured to dry the electrode active material and to volatilize the anti-coating material.

5. The electrode manufacturing apparatus according to claim 1, wherein the stamping member includes a pair of stamping members located on an upper surface of the electrode current collector and a lower surface of the electrode current collector so as to face each other.

6. The electrode manufacturing apparatus according to claim 1, wherein the stamping member comprises:
a stamping body comprising a cylindrical central portion having an axis of rotation parallel to a width direction of the electrode current collector and a plurality of projecting portions projecting outward from the cylindrical central portion so as to be spaced apart from each other by a predetermined distance; and
an application member provided at an end of each projecting portion of the plurality of projecting portions of the stamping body.

7. The electrode manufacturing apparatus according to claim 6, wherein
the stamping body supplies the anti-coating material to the application member while rotating about the axis of rotation thereof, and
the application member applies the anti-coating material to the electrode current collector at predetermined intervals while discontinuously contacting the electrode current collector.

8. The electrode manufacturing apparatus according to claim 7, wherein the stamping body rotates in a transfer direction of the electrode current collector.

9. The electrode manufacturing apparatus according to claim 1, wherein the electrode active material supply member includes a pair of electrode active supply members located on an upper surface and a lower surface of the electrode current collector so as to face each other.

10. The electrode manufacturing apparatus according to claim 1, wherein the electrode active material comprises a hydrophilic material.

11. An electrode manufacturing method using the electrode manufacturing apparatus according to any one of claims 1 to 10, comprising:
a first step of supplying an electrode current collector;
a second step of applying an anti-coating material to the electrode current collector;
a third step of applying an electrode active material to the electrode current collector to form a coating layer; and
a fourth step of drying the electrode current collector coated with the anti-coating material and the electrode active material.

12. The electrode manufacturing method according to claim 11, wherein, in the second step, the anti-coating materials are applied so as to be spaced apart from each other by a predetermined distance.

13. The electrode manufacturing method according to claim 11, wherein the electrode active material is not coated in a region where the anti-coating material is applied.

14. The electrode manufacturing method according to claim 11, further comprising connecting an electrode lead to the electrode current collector after the anti-coating material is removed from a region where the anti-coating material is applied.

15. The electrode manufacturing method according to claim 11, further comprising slitting the electrode current collector coated with the anti-coating material and the electrode active material after the fourth step.
